# FASCICULE DE BREVET EUROPEEN

(11) **EP 2 539 138 B1**
(45) Date de publication et mention de la délivrance du brevet: **11.05.2016**
(21) Numéro de dépôt: 11704773.8
(22) Date de dépôt: 18.02.2011
(51) Int. Cl.: B29D 11/00, G02C 7/04

(54) **PROCÉDÉ DE FABRICATION D'UNE LENTILLE DE CONTACT HYBRIDE**
VERFAHREN ZUR HERSTELLUNG EINER HYBRIDKONTAKTLINSE
METHOD FOR MAKING A HYBRID CONTACT LENS

(30) Priorité: 25.02.2010 FR 1051338
(43) Date de publication de la demande: 02.01.2013
(73) Titulaire: Lentilles, 14000 Caen (FR)
(72) Inventeur: VEILLARD, Emmanuel, F-14000 Caen (FR); RENAULT, Pascal, F-14000 Caen (FR); LEBAILLY, Jean-Philippe, F-14000 Caen (FR)
(74) Mandataire: Benech, Frédéric
(86) Numéro de dépôt international: PCT/EP2011/052414
(87) Numéro de publication internationale: WO 2011/104181

(56) Documents cités:
- WO-A1-94/06621
- WO-A2-2005/079290
- GB-A- 1 417 650

## Description

La présente invention concerne un procédé de fabrication d'une lentille de contact hybride, ainsi qu'une lentille de contact hybride obtenue par un tel procédé de fabrication.

Dans le domaine des lentilles de contact, il existe deux grandes familles : les lentilles rigides et les lentilles hydrophiles.

Les lentilles rigides sont perméables à l'oxygène et permettent de compenser les défauts visuels irréguliers apparus par exemple à la suite d'un traumatisme ou d'une pathologie mais elles sont inconfortables.

Les lentilles hydrophiles offrent un grand confort grâce à leur souplesse et leur grand diamètre mais elles sont incapables de compenser les défauts visuels irréguliers comme par exemple les astigmatismes irréguliers.

Une nouvelle famille de lentilles de contact est apparue pour permettre de compenser les défauts visuels irréguliers tout en procurant une grande sensation de confort. Cette nouvelle famille est constituée de lentilles de contact hybrides qui sont constituées d'un coeur du type lentille rigide, et d'une jupe périphérique du type lentille hydrophile.

Différents procédés de fabrication de ces lentilles hybrides ont été mis en oeuvre, mais aucun ne donne une entière satisfaction, en particulier sur le plan de la facilité de la mise en oeuvre.

Un objet de la présente invention est de proposer un procédé de fabrication d'une lentille de contact hybride qui ne présente pas les inconvénients de l'art antérieur et qui en particulier permet une mise en oeuvre aisée.

Un procédé selon la préambule de la revendication 1 est décrit dans WO 9406621 A1.

A cet effet, est proposé un procédé de fabrication d'une lentille de contact hybride selon la revendication 1.

Avantageusement, le procédé de fabrication comporte, préalablement à l'étape d'hydratation, une étape de pré-usinage du palet hydrophile.

L'élément adhésif a pour catalyseur l'eau

Avantageusement, l'étape de fourniture d'un palet rigide consiste en la fourniture d'un palet rigide présentant une forme convexe.

Une lentille de contact selon la preambule de la revendication 10 est décrite dans GB 1417650 A.

L'invention propose également une lentille de contact hybride selon la revendication 10.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
- les Figs. 1 à 4 représentent les différentes étapes du procédé de fabrication selon un mode de réalisation de l'invention,
- la Fig. 5 représente une lentille de contact hybride selon un mode de réalisation de l'invention,
- la Fig. 6 montre une étape de séchage des deux palets selon un autre mode de réalisation de l'invention, et
- la Fig. 7 représente une lentille de contact hybride selon un autre mode de réalisation de l'invention.

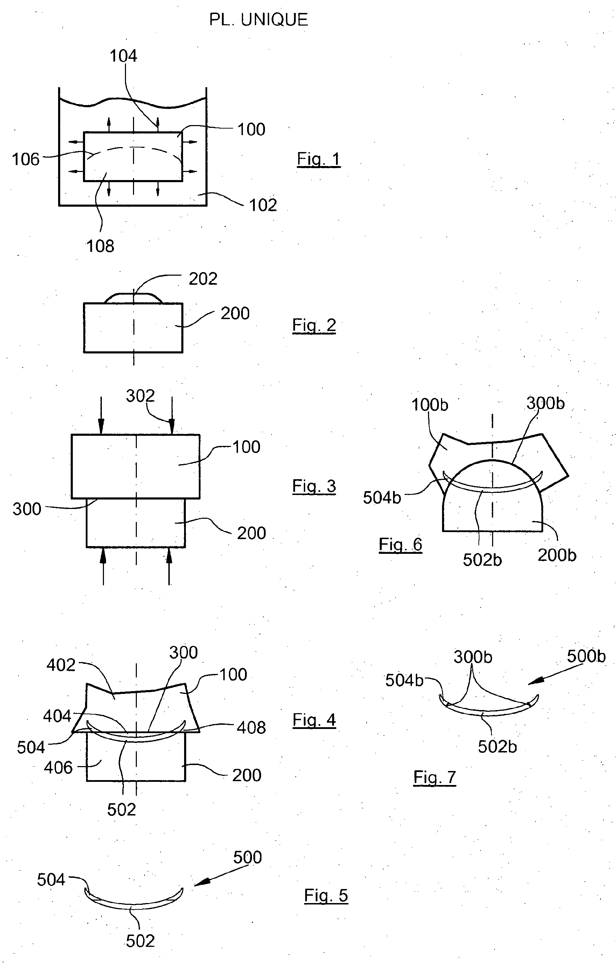

La Fig. 5 montre une lentille de contact hybride 500 obtenue par la mise en oeuvre d'un procédé de fabrication selon l'invention. La lentille de contact hybride 500 comporte un coeur 502 du type lentille rigide et une jupe périphérique 504 du type lentille hydrophile.

Le procédé de fabrication, dont les différentes étapes sont représentées sur les Figs. 1 à 4, est mis en oeuvre à partir d'un palet souple hydrophile et d'un palet rigide perméable aux gaz. De tels palets sont également appelés "boutons".

Chaque palet prend classiquement la forme d'un cylindre plein dont l'axe est représenté par une ligne en traits mixtes fins.

Le palet hydrophile est par exemple un palet en hydroxyéthylmétacrylate (HEMA) ou tout autre matériau adéquat. Le matériau utilisé est du type des matériaux utilisés pour réaliser les lentilles silicone-hydrogel (LSiH) ou les lentilles souples hydrophiles (LSH).

Le palet rigide est par exemple un palet en polyméthyl-méthacrylate (PMMA) ou tout autre matériau adéquat. Le matériau utilisé est du type des matériaux utilisés pour réaliser les lentilles rigides perméables aux gaz (LRPG) de tous types de Dk de 0 à 200.

La Fig. 1 montre une étape d'hydratation du palet hydrophile 100. Le palet hydrophile 100 est plongé dans une solution aqueuse 102 qui est par exemple du type sérum physiologique.

La plongée du palet hydrophile 100 dans la solution aqueuse 102 entraîne l'expansion dudit palet hydrophile 100 (flèches 104).

L'étape d'hydratation du palet hydrophile 100 s'effectue avantageusement jusqu'à l'hydratation complète du palet hydrophile 100.

Dans d'autres modes de réalisation de l'invention, l'hydratation avant le collage peut être partielle et le taux d'hydratation dépend du matériau composant le palet hydrophile 100. A titre d'exemple, pour le matériau portant la référence GM Advance 49%, dont l'hydrophilie est de 49%, le taux d'hydratation avant le collage est de préférence entre 55% et 60% et plus particulièrement de 55,4%. C'est-à-dire qu'au moment du collage, le palet hydrophile hydraté 100 est composé de 27% de solution aqueuse et de 73% du polymère hydrophile.

La durée de l'étape d'hydratation varie de un à plusieurs jours en fonction de l'hydrophilie du matériau utilisé et du taux d'hydratation souhaité avant le collage

La Fig. 2 montre une étape de dépose d'un élément adhésif 202 sur une face d'extrémité du palet rigide 200, ici la face plane supérieure.

L'élément adhésif 202 peut être de la colle ou un polymère ou tout produit compatible avec une utilisation dans les yeux et qui permet de coller les deux palets 100 et 200 de manière satisfaisante.

La colle 202 peut être par exemple du cyanoacrylate, un dérivé de cyanoacrylate comme par exemple de l'éthyl-cyanoacrylate, ou toute autre colle adéquate ou tout autre polymère assurant l'assemblage des deux polymères.

La Fig. 3 montre une étape de collage du palet hydrophile 100 hydraté et donc expansé contre la face du palet rigide 200 qui porte l'élément adhésif 202.

Les deux palets 100 et 200 sont maintenus en contact durant le temps nécessaire à un collage parfait des deux palets 100 et 200. La durée de cette étape de collage varie de 1 à 10 secondes en fonction des matériaux utilisés pour les palets 100 et 200 et pour l'élément adhésif 202.

Les flèches 302 représentent les forces qui maintiennent les palets 100 et 200 en contact pour assurer leur collage et qui sont créées par tout dispositif adéquat.

Les faces d'extrémités des deux palets 100 et 200 sont alors collées l'une à l'autre au niveau d'un plan de jonction 300.

Dans le mode de réalisation de l'invention présenté ici, le collage s'effectue par polymérisation.

La Fig. 4 montre une étape de séchage des deux palets 100 et 200 ainsi collés. Le palet hydrophile 100 est déshydraté et donc son volume s'est réduit.

La durée de cette étape de collage varie de 1 à plusieurs jours en fonction des matériaux utilisés pour les palets 100 et 200 et pour l'élément adhésif 202.

L'étape de séchage peut être facilitée par l'utilisation d'un four et/ou de sels de dessiccation.

Lorsque le séchage de l'élément adhésif est terminé, les palets 100 et 200 ainsi collés et séchés subissent une étape de taille qui consiste à réaliser la lentille de contact hybride 500.

Avantageusement, l'étape de taille s'effectue lorsque le palet hydrophile 100 est complètement déshydraté.

L'étape de taille consiste par exemple d'abord à usiner la face arrière de la lentille de contact hybride 500, puis à usiner la face avant, et ce, dans les règles de l'art connues en fabrication de lentilles de contact.

La lentille de contact hybride 500 est ainsi réalisée de part et d'autre du plan de jonction 300.

Pour la zone qui se trouve à l'arrière du coeur 502, l'usinage de la face arrière de la lentille de contact hybride 500 s'effectue par enlèvement de la matière 402 du palet hydrophile 100 jusqu'au plan de jonction 300, puis par enlèvement de la matière 404 du palet rigide 200 du plan de jonction 300 jusqu'à la face arrière du coeur 502 de la lentille de contact hybride 500.

Pour la zone qui se trouve à l'arrière de la jupe périphérique 504, l'usinage de la face arrière de la lentille de contact hybride 500 s'effectue par enlèvement de la matière 402 du palet hydrophile 100 jusqu'à la face arrière de la jupe périphérique 504 de la lentille de contact hybride 500.

Pour la zone qui se trouve à l'avant du coeur 502, l'usinage de la face avant de la lentille de contact hybride 500 s'effectue par enlèvement de la matière 406 du palet rigide 200 jusqu'à la face avant du coeur 502 de la lentille de contact hybride 500.

Pour la zone qui se trouve à l'avant de la jupe périphérique 504, l'usinage de la face avant de la lentille de contact hybride 500 s'effectue par enlèvement de la matière 406 du palet rigide 200 jusqu'au plan de jonction 300, puis par enlèvement de la matière 408 du palet hydrophile 100 du plan de jonction 300 jusqu'à la face avant de la jupe périphérique 504 de la lentille de contact hybride 500.

Cette étape de taille est effectuée à l'aide d'outils conventionnels, comme par exemple un tour numérique.

Le procédé de fabrication de la lentille de contact hybride 500 comporte donc:
- une étape de fourniture du palet hydrophile 100,
- une étape de fourniture du palet rigide 200,
- une étape d'hydratation du palet hydrophile 100,
- une étape de dépose de l'élément adhésif 202 sur une face du palet rigide 200,
- une étape de collage du palet hydrophile 100 contre ladite face du palet rigide 200,
- une étape de séchage des deux palets 100 et 200 ainsi collés, et
- une étape de taille des deux palets 100 et 200 ainsi collés et séchés.

Le procédé de fabrication de la lentille de contact hybride 500 est donc particulièrement simple à mettre en oeuvre.

L'hydratation préalable du palet hydrophile 100 et son expansion évitent l'apparition de plis après le collage et l'hydratation de la lentille de contact hybride 500 lors de son utilisation quotidienne. En effet, si le procédé de fabrication ne met pas en oeuvre une telle étape d'hydratation, l'hydratation postérieure des deux palets 100 et 200 collés entraîne une expansion de la jupe périphérique 504 et l'apparition de plis et de déformations au niveau de la zone de collage entre ladite jupe périphérique 504 et ledit coeur 502, la lentille ne pourrait alors être supportée sur un oeil.

Pour faciliter l'hydratation partielle ou complète du palet hydrophile 100 et réduire le temps nécessaire à cette hydratation complète, le palet hydrophile 100 subit une étape de pré-usinage préalable à l'étape d'hydratation, qui consiste à retirer une partie 108 du palet hydrophile 100. La partie 108 n'est pas utilisée dans la lentille de contact hybride 500.

La courbe 106 montre la limite du pré-usinage.

Pour faciliter le collage des deux palets 100 et 200, il est intéressant d'utiliser un élément adhésif 202 dont le catalyseur est l'eau ou les ultra-violets. En effet, l'élément adhésif 202 réagit au contact de l'eau contenue dans le palet hydrophile 100 hydraté et se polymérise plus aisément et rapidement. Le cyanoacrylate ou ses dérivés sont particulièrement intéressants de ce point de vue.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cadre de palets cylindriques avec des faces d'extrémités planes mais elle s'applique de la même manière pour des palets de formes différentes ou avec des faces d'extrémités non planes ou des palets pré taillés et dégrossis.

La Fig. 6 montre l'étape de séchage entre un palet hydrophile 100b et un palet rigide 200b présentant une forme convexe.

Le palet hydrophile 100b est ainsi collé sur la forme convexe du palet rigide 200b et la surface de collage 300b présente également une forme convexe.

La Fig. 7 montre la lentille de contact hybride 500b qui a été obtenue par enlèvement de la matière à partir du palet rigide 200b collé au palet souple 100b de la Fig. 6.

La lentille de contact hybride 500b comporte alors un coeur rigide 502b et une jupe périphérique 504b souple.

Ainsi la surface de collage 300b suit la courbure du palet rigide 200b.

Dans le mode de réalisation de l'invention présenté sur les Figs. 6 et 7, la surface de collage 300b est sensiblement perpendiculaire à la surface externe de la lentille de contact hybride 500b ce qui permet de diminuer la partie visible de la zone de collage 300b.

Les durées des étapes qui sont mentionnées ci-dessus sont données à titre d'exemple et peuvent varier en dehors des limites mentionnées avec d'autres matériaux.

## Revendications

1. Procédé de fabrication d'une lentille de contact hybride formée d'un coeur rigide connecté à une jupe périphérique hydrophile par un élément ayant des caractéristiques adhésives avec ledit coeur et ladite jupe, **caractérisée en ce que** il comporte les étapes suivantes
on fournit un palet rigide et un palet hydrophile, on hydrate ledit palet hydrophile,
l'élément ayant des caractéristiques adhésives étant de la colle, on dépose ladite colle sur une face du palet rigide,
on colle le palet hydrophile ainsi hydraté sur ladite face du palet rigide,
on sèche les deux palets ainsi collés,
puis on taille à sec les deux palets ainsi collés et séchés pour obtenir la lentille de contact à coeur rigide et jupe périphérique hydrophile.

2. Procédé selon la revendication 1, **caractérisé en ce que** on déshydrate complètement la lentille obtenue avant de la tailler.

3. Procédé selon l'une quelconque des revendications précédentes, **caractérisé en ce que** avant l'hydratation du palet hydrophile, on pré-usine ce dernier.

4. Procédé selon l'une quelconque des revendications précédentes, **caractérisé en ce que** la colle a pour catalyseur l'eau.

5. Procédé selon la revendication 4, **caractérisé en ce que** la colle est choisie parmi les dérivés du cyanoacrylate, dont l'éthyl-cyanoacrylate.

6. Procédé selon l'une quelconque des revendications précédentes, **caractérisé en ce que** on colle par application d'un palet sur l'autre en appliquant les forces nécessaires pour assurer le collage pendant un temps suffisant.

7. Procédé selon la revendication 5, **caractérisé en ce que** le temps est compris entre 1 et 10,s.

8. Procédé selon l'une quelconque des revendications précédentes, **caractérisé en ce que** on taille au préalable le palet rigide pour que sa surface de collage présente une forme convexe et le palet souple pour que sa surface de collage présente une forme concave complémentaire à ladite forme convexe.

9. Procédé selon la revendication 8, **caractérisé en ce que** la surface de collage (300b) est agencée pour être sensiblement perpendiculaire à la surface externe de la lentille de contact.

10. Lentille de contact hybride formée d'un coeur rigide connecté à une jupe périphérique souple hydrophile par un élément ayant des caractéristiques adhésives avec ledit coeur et ladite jupe, **caractérisée en ce que** le matériau est de la colle formée par un polymère ayant comme catalyseur l'eau et qu'elle est obtenue par le procédé selon l'une quelconque des revendications précédentes.

## Patentansprüche

1. Verfahren zur Herstellung einer Hybridkontaktlinse, die durch einen harten mittigen Teil gebildet ist, welcher mit einem hydrophilen umfänglichen Teil durch ein Element mit Hafteigenschaften in Bezug auf den mittigen Teil und den umfänglichen Teil verbunden ist,
**dadurch gekennzeichnet,**
**dass** es folgende Schritte umfasst:
- Bereitstellung einer harten Scheibe und einer hydrophilen Scheibe,
- Hydratisierung der hydrophilen Scheibe,
- das Element mit Hafteigenschaften Klebstoff ist und der Klebstoff auf eine Seite der harten Scheibe aufgetragen wird,
- die hydrophile derart hydratisierte Scheibe auf die genannte Seite der harten Scheibe geklebt wird,
- die zwei derart verklebten Scheiben werden getrocknet,
- die zwei derart verklebten und getrockneten Scheiben werden trockengeschliffen, um die Kontaktlinse mit hartem mittigem Teil und hydrophilem umfänglichem Teil herzustellen.

2. Verfahren nach Anspruch 1,
**dadurch gekennzeichnet,**
**dass** die hergestellte Linse vor dem Schleifen vollständig dehydratisiert wird.

3. Verfahren nach einem der vorhergehenden Ansprüche,
**dadurch gekennzeichnet,**
**dass** vor der Hydratisierung der hydrophilen Scheibe diese vorbearbeitet wird.

4. Verfahren nach einem der vorhergehenden Ansprüche,
**dadurch gekennzeichnet,**
**dass** der Klebstoff Wasser als Katalysator aufweist.

5. Verfahren nach Anspruch 4,
**dadurch gekennzeichnet,**
**dass** der Klebstoff unter den Derivaten des Cynoacrylats, insbesondere Ethylcyanoacrylat ausgewählt wird.

6. Verfahren nach einem der vorhergehenden Ansprüche,
**dadurch gekennzeichnet,**
**dass** die Klebung durch Anlegen einer Scheibe auf die andere unter Anwendung der für die Klebung notwendigen Kräfte während einer ausreichenden Zeit erfolgt.

7. Verfahren nach Anspruch 5,
**dadurch gekennzeichnet,**
**dass** die Zeit zwischen 1 und 10 s liegt.

8. Verfahren nach einem der vorhergehenden Ansprüche,
**dadurch gekennzeichnet,**
**dass** die harte Scheibe vorab geschliffen wird, damit ihre Klebefläche eine konvexe Form aufweist, und die weiche Scheibe vorab geschliffen wird, damit ihre Klebefläche eine konkave Form aufweist, die komplementär zu der konvexen Form ist.

9. Verfahren nach Anspruch 8,
**dadurch gekennzeichnet,**
**dass** die Klebefläche (300b) so angeordnet ist, dass sie im Wesentlichen senkrecht zu der externen Fläche der Kontaktlinse ist.

10. Hybridkontaktlinse, die durch einen harten mittigen Teil gebildet ist, welcher mit einem hydrophilen weichen umfänglichen Teil durch ein Element mit Hafteigenschaften in Bezug auf den mittigen Teil und den umfänglichen Teil verbunden ist,
**dadurch gekennzeichnet,**
**dass** das Material Klebstoff ist, der durch ein Polymer mit Wasser als Katalysator gebildet ist, und dass sie durch das Verfahren nach einem beliebigen der vorhergehenden Ansprüche hergestellt wird.

## Claims

1. Method for making a hybrid contact lens formed of a rigid central portion connected to a hydrophilic peripheral skirt by an element having adhesive properties with said central portion and said skirt, **characterised in that** it comprises the following steps
supplying a rigid disk and a hydrophilic disc,
hydrating said hydrophilic disc,
the element having adhesive properties being glue, applying said glue on one face of the rigid disc,
gluing the hydrophilic disc thus hydrated on said face of the rigid disc,
drying the two discs thus glued,
then cutting dry the two discs thus glued and dried to obtain the contact lens with the rigid central portion and the hydrophilic peripheral skirt.

2. Method according to claim 1, **characterised in that** the lens obtained is dehydrated completely before cutting it.

3. Method according to any one of the preceding claims, **characterised in that** before the hydration of the hydrophilic disc, it is pre-machined.

4. Method according to any one of the preceding claims, **characterised in that** the glue has water as a catalyst.

5. Method according to claim 4, **characterised in that** the glue is selected from the derivatives of cyanoacrylate, including ethyl cyanoacrylate.

6. Method according to any one of the preceding claims, **characterised in that** gluing is carried out by application of one disc on the other while applying the forces necessary to effect the gluing for a sufficient time.

7. Method according to claim 6, **characterised in that** the time is between 1 and 10 s.

8. Method according to any one of the preceding claims, **characterised in that** as a preliminary the rigid disc is cut so that its gluing surface exhibits a convex shape and the flexible disc is cut so that its gluing surface exhibits a concave shape complementing said convex shape.

9. Method according to claim 8, **characterised in that** the gluing surface (300b) is arranged so as to be substantially perpendicular to the external surface of the contact lens.

10. Hybrid contact lens formed of a rigid central portion connected to a hydrophilic flexible peripheral skirt by an element having adhesive properties with said central portion and said skirt, **characterised in that** the material is glue formed by a polymer having water as a catalyst and **in that** it is obtained by the method according to any one of the preceding claims.
